Europäisches Patentamt

(19) European Patent Office

Office européen des brevets

(11) **EP 0 813 700 B1**

(12) **EUROPÄISCHE PATENTSCHRIFT**

(45) Veröffentlichungstag und Bekanntmachung des Hinweises auf die Patenterteilung:
**28.06.2000 Patentblatt 2000/26**

(51) Int Cl.$^7$: **G05B 13/02**

(21) Anmeldenummer: **96905685.2**

(22) Anmeldetag: **06.03.1996**

(86) Internationale Anmeldenummer:
**PCT/DE96/00396**

(87) Internationale Veröffentlichungsnummer:
**WO 96/28771 (19.09.1996 Gazette 1996/42)**

(54) **INTELLIGENTES RECHNER-LEITSYSTEM**

INTELLIGENT COMPUTERIZED CONTROL SYSTEM

SYSTEME DE GESTION INTEGRE INTELLIGENT

(84) Benannte Vertragsstaaten:
**AT DE**

(30) Priorität: **09.03.1995 DE 19508474**

(43) Veröffentlichungstag der Anmeldung:
**29.12.1997 Patentblatt 1997/52**

(73) Patentinhaber: **SIEMENS AKTIENGESELLSCHAFT**
**80333 München (DE)**

(72) Erfinder:
• **SCHULZE HORN, Hannes**
**D-45966 Gladbeck (DE)**
• **ADAMY, Jürgen**
**D-91338 Igensdorf (DE)**

(56) Entgegenhaltungen:
WO-A-94/29773          DE-A- 4 301 130

• **AUTOMATISIERUNGSTECHNIK - AT, Bd. 42, Nr. 11, 1.November 1994, Seiten A37-40, XP000483092 NOWINSKI G: "LERNFAHIGE KONNEKTIONISTISCHE STRUKTUREN IN DER AUTOMATISIERUNGSTECHNIK CONNECTIONISTIC STRUCTURES WITH THE ABILITY OF LEARNING IN AUTOMATIC CONTROL"**
• **ADVANCES IN INSTRUMENTATION, Bd. 41, Nr. 1, 1986, RESEARCH TRIANGLE PARK US, Seiten 169-175, XP002007474 W.J. LEECH: "A RULE BASED PROCESS CONTROL METHOD WITH FEEDBACK"**
• **IEEE TRANSACTIONS ON SYSTEMS, MAN AND CYBERNETICS, Bd. 23, Nr. 5, 1993, NEW YORK US, Seiten 1330-1339, XP000417060 A. VARSEK ET AL.: "Genetic algorithms in controller design and tuning"**

EP 0 813 700 B1

**Beschreibung**

Die Erfindung betrifft ein intelligentes Rechner-Leitsystem mit den in Anspruch 1 definierten Merkmalen.

Bei industriellen Einrichtungen, wie z.B. Anlagen zur Erzeugung von Gütern, Energie oder zur Kommunikation etc. besteht seit jeher das Bedürfnis nach einem Leitsystem, das eine möglichst optimale, automatische, intelligente Führung des ablaufenden Prozesses sicher und kostengünstig ermöglicht. Dabei besteht auch das Bedürfnis nach einer evolutionären Selbstverbesserung des Leitsystems.

Es ist Aufgabe der Erfindung, ein Leitsystem anzugeben, das als intelligentes System die vorstehenden Bedürfnisse in einer Form befriedigt, die eine Übernahme der angewendeten Rechentechnik auf Einrichtungen der unterschiedlichsten Art ermöglicht.

Insbesondere durch konventionelle Regel- oder Rechentechnik nicht besonders gut beherrschbare Teilprozesse sollen dabei unter Beachtung der Rückwirkungen so optimiert werden, daß eine Prozeßführung mit Hilfe voreinstellbarer, einfacher Stellglieder oder über einfache prozesstechnische Maßnahmen kostengünstig möglich ist.

Die Aufgabe wird im Grundsatz durch die im Anspruch 1 genannten Maßnahmen gelöst. Die Unteransprüche enthalten vorteilhafte Ausgestaltungen der Lösung.

Im Stand der Technik sind bereits Leitsystem-Lösungen bekannt, die sogenannte intelligente Komponenten verwenden. Aus der WO 93/08515 ist z.B. eine Steuer- und Regeleinrichtung für technische Prozesse bekannt, die mit wissensbasierten Steuerregeln für ausgewählte Prozeßzustände arbeitet. Die Bildung von Steuer- oder Stellgrößen für die übrigen Prozeßzustände erfolgt in der Einrichtung mit Hilfe einer stetigen mathematischen Funktion, die wissensbasierte Steuerregeln verknüpft und so - ähnlich einer nichtlinearen Interpolation - Steuerregeln für alle Prozeßzustände schafft. Diese bekannte Einrichtung ist nicht im Hinblick auf einen besseren Prozeßerfolg zielgerichtet selbsttätig handelnd aufgebaut. Die menschliche Operatorintelligenz ist noch unverzichtbar. Eine evolutionäre Selbstentwicklung der intelligenten Komponenten ist nicht vorgesehen.

Aus dem Aufsatz "Das Expertensystem MODI - ein Beitrag zur wirtschaftlichen und sicheren Führung von Kraftwerken, ABB Technik 6/7, 1994, Seiten 38-46, ist weiterhin ein Experten-system bekannt, das den Zustand von Kraftwerksprozessen durch Vergleich charakteristischer Merkmale mit einem mathematischen Referenzmodell überwacht und bei Abweichungen vom Normalverhalten deren Ursachen analysiert. Die anlagenweite Sichtweise dieses Expertensystems gestattet es, Aussagen über den Prozeß als ganzes zu machen, eine selbsttätige, sich automatisch optimierende, Prozeßführung ist über das beschriebene Experten-System jedoch nicht möglich.

In dem Aufsatz "Process optimization for maximum availability in continuous casting" der Zeitschrift "Metallurgical Plant and Technology International" 5/1994, Seiten 52-58, wird weiterhin ein Rechner-Leitsystem beschrieben, das mit Hilfe von Modellen das Stranggießen von Stahl automatisiert und die Produktqualität überwacht. Dies geschieht mit Hilfe von graphischen Darstellungen, also über eine Mensch-Maschine-Schnittstelle. Eine intelligente automatische Prozeßführung ist bei diesem Leitsystem ebenfalls nicht vorgesehen.

In ähnlicher Weise arbeitet auch das in der EP 0 411 962 A2 beschriebene Leitsystem, das speziell für das Bandgießen von Stahl entwickelt wurde. Auch hier sind Anlagentestläufe die Grundlage für Expertenwissen, das in Form von Grenzkurven verwendet wird. Eine fortlaufende oder schrittweise, selbständige rechentechnische Optimierung findet nicht statt.

Die DE-A-4 301 130 offenbart ein Verfahren bzw. eine Einrichtung zur Regelung eines Walzgerüstes, wobei ein adaptives Modell verwendet wird.

Die vorstehend genannten, mit intelligenten Komponenten arbeitenden Systeme, erreichen die Qualität der erfindungsgemäßen Lösung nicht. Ein Weg zur Befriedigung der einleitend genannten Bedürfnisse ist noch nicht einmal angedeutet.

Wichtig für ein allgemein akzeptiertes Prozeß- und Anlagen-Leitsystem ist, daß es sicher arbeitet. Erfindungsgemäß weist daher das Leitsystem vorteilhaft ein, den rechentechnisch intelligenten Teil ergänzendes, Basis-Funktionssystem auf, das die Anweisungen aus dem rechentechnisch gewonnenen Wissen in eine sichere Prozeßführung bzw. Anlagenfunktion umsetzt.

Das Basis-Funktionssystem ist vorteilhaft als ein die Anlagekomponenten je für sich oder zusammengefaßt, sicher arbeitsfähig machendes Subsystem ausgebildet, z.B. auf der Grundlage der Bedingungen für die Massenflußregelung, für Eingangsgrößen-Grenzwerte etc. Zusammen mit Sicherheitskreisen, etwa für die Antriebe in Form eines hochverfügbaren Systems, wird die, für Produktionsanlagen von Gütern oder Energie etc. notwendige, Betriebssicherheit erreicht. Auch bei einem Ausfall oder einer Fehlfunktion der intelligenten Rechentechnik ist so eine sichere Anlagenfunktion, wenn auch auf suboptimaler Basis, gewährleistet.

Zur Überführung in einen sicheren Zustand bei Ausfall oder Fehlfunktion einzelner, intelligenter Leitsystemteile, greift das, einen sicheren Zustand der Anlage und des Prozesses garantierende Subsystem vorteilhaft auf als sicher erkannte oder berechnete Betriebswerte, Verfahrensabläufe etc. zurück, die vorteilhaft in Tabellenform gesondert gespeichert werden. Dies ist insbesondere für Anlagen wichtig, die in gefährliche Zustände geraten könnten (Explosionsgefahr, Selbstzerstörungsgefahr).

Vorteilhaft ist dabei vorgesehen, daß das Basis-Funktionssystem Start- und Hochlaufroutinen aufweist, die manuell oder automatisch eingegeben werden können sowie insbesondere, daß Betriebsroutinen vorhanden sind, in denen einzelne, sonst rechentechnisch ermittelte, Anweisungen durch konstante Vorgaben ersetzt werden. Konstante Vorgaben können u.a. konstante Materialqualitäten, konstante Durchlaufgeschwindigkeiten des Materials, konstante Kühlmittelmengen etc. sein, so daß, insbesondere in der Inbetriebsetzungsphase einer Anlage, erhebliche Teile der Modellerstellung zunächst zurückgestellt werden können. Dies ist insbesondere vorteilhaft, wenn entweder das Anlagenwissen noch nicht vollständig vorliegt, z.B. in Anlagenteilen, in denen Phasenumwandlungen des Materials stattfinden und für die aufgrund einer hohen Prozeßtemperatur (bei der Erstarrung von Stahl oder bei den Vorgängen im Inneren einer Hochtemperatur-Brennstoffzelle) keine Sensorik vorhanden ist, die Auskunft über das spezielle Prozeßverhalten in diesem Anlagenteil geben kann oder wenn noch keine Trainingsdaten für ein neuronales Netz gesammelt werden konnten. Hier kann bis zum Vorliegen detaillierten Prozeßwissens ganz oder teilweise mit konstanten Vorgaben oder begrenzten Vorgabeänderungen gearbeitet werden. In Ausführung des intelligenten Teils des Leitsystems ist vorgesehen, daß der Prozeß anhand eines Prozeßmodells nachgebildet wird. Die Nachbildung ist insbesondere modular aufgebaut und beschreibt das Verhalten zwischen den Prozeßeingangsgrößen sowie den Stellgrößen und den Prozeßausgangsgrößen, d.h. den Mengen- und Qualitätskennwerten des erzeugten Produktes. Von wesentlichem Vorteil (neben der Möglichkeit der Prozeßführung entsprechend der Anpassung der Parameter o.ä. des Modells) ist bei einem derartigen, den Prozeß beschreibenden, zur Erstellungs- und Optimierungsvereinfachung modulartig aufgebauten, Modell die Möglichkeit der fortlaufenden Adaption und Optimierung ohne in den Prozeß selbst eingreifen zu müssen. Dabei können vorteilhaft alle gängigen Adaptions- und Optimierungsverfahren eingesetzt werden. Weiterhin ist sehr vorteilhaft, daß am Modell auch Grenzzustände berechnet werden können, die Aufschlüsse über kritisches Verhalten der Anlage geben.

Das Prozeßmodell ist vorteilhaft soweit wie möglich in mathematischen Beschreibungsformen gehalten. Diese ermöglichen genau überschaubare Vorhersagen des Prozeßverhaltens. Für die Anlagenteile, für die Prozeßwissen nur in linguistisch ausdrückbarer Form vorliegt, werden vorteilhaft linguistisch formulierte Modellteile verwendet, etwa Fuzzy-Systeme, Neuro-Fuzzy-Systeme, Experten-Systeme oder auch Tabellenwerke. So ist auch eine Modellierung physikalisch nicht beschreibbarer Prozessteile möglich, wobei die gedachten Abläufe relativ leicht zu verstehen und wertbar sind. Für Teilprozesse, für die kein oder kaum Wissen vorliegt, ist es vorteilhaft, wenn als Modellteil ein lernfähiges neuronales Netz verwendet wird, wobei die Lernfähigkeit auch den Aufbau des neuronalen Netzes umfaßt. Da diese, in ihrer inneren Funktion unbekannten, Teile des Modells nur einen kleinen Teil des Gesamtmodells ausmachen, sind diese Lücken im Anlagenwissen, die rein funktionell ausgefüllt werden, hinnehmbar. Vorteilhaft werden als neuronale Netze einfache feed forward-Netze verwendet, die durch Back Propagation verbessert werden.

Für eine Optimierung durch verbesserte Modelle bieten sich neben anderen Optimierungsstrategien insbesondere genetische Algorithmen an. Bei diesen ist die Wahrscheinlichkeit hoch, das erreichbare Optimum oder ein anderes sehr gutes, suboptimales Extremum, tatsächlich zu finden. Die Eignung der Strategie der Rechnungen mit genetischen Algorithmen o.ä. kann dabei insbesondere durch ein neuronales Netz geprüft werden, das die in Richtung eines globalen Optimums laufenden Werte ermittelt. Diese Optimierung erfolgt wegen des damit verbundenen großen Rechenaufwandes vorteilhaft off-line.

Eine off-line Rechnung empfiehlt sich auch für die Parameter-adaption des Modells mit Ausnahme der Modellteile, die Anlagenteile mit schnellen dynamischen Vorgängen beschreiben.

Die Startwerte für einen Optimierungsvorgang werden ebenso wie bei den Adaptionsvorgängen auf der Basis von im Prozeßdatenspeicher archivierten Betriebsdaten ermittelt, dies hat den Vorteil, daß der Vorgang beschleunigt wird. Bei Optimierungsvorgängen, etwa wenn das Optimierungsergebnis unbefriedigend ist, kann es aber auch vorteilhaft sein, mit vollständig neuen Ausgangsdaten zu beginnen. So wird verhindert, daß sich der Optimierungsvorgang nur in einem Nebengebiet des globalen Optimums abspielt. Dies gilt insbesondere, wenn der Aufbau des Modells unsicher ist, hier empfiehlt es sich, mit geändertem Modell und neuen Startwerten neue Optimierungen durchzuführen. Die Optimierungen werden in einer dafür bestimmten Recheneinheit, dem Optimierer durchgeführt.

In Ausgestaltung der Erfindung ist nun vorgesehen, daß die vom Optimierer off-line anhand des Prozeßmodells bestimmten einstellbaren Prozeßgrößen, die so ermittelt werden, daß die vom Modell nachgebildeten Kennwerte des erzeugten Produktes möglichst gut mit den vorgegebenen wünschenswerten übereinstimmen, als Vorgabewerte an das Basis-Funktionssystem des Prozesses gegeben werden und von diesem der Prozeß entsprechend den Vorgabewerten eingestellt wird. So ergibt sich eine sichere Prozeßführung neben der gleichzeitig eine weitere Optimierung möglich ist.

In Ausgestaltung der Erfindung ist vorgesehen, daß das Vorwissen laufend durch am Prozeß während der Produktion intern rechentechnisch, z.B. in unterschiedlichen Betriebspunkten, gewonnenes Wissen verbessert und dieses selbst generierte Prozeßwissen in einen, insbesondere ständig aktualisierten, Datenspeicher übernommen wird. Durch diese Vorgehensweise erfolgt ständig ein vorteilhafter Ausbau des Vorwissens über die Anlage und ihr Verhalten.

Es ist dabei vorgesehen, daß die Vorgabewerte für das Basis-Funktionssystem, die bei einem Ausfall o.ä.

des intelligenten Teils des Leitsstems direkt aus den Daten der Prozeßdatenbank erzeugt werden, durch einen Interpolationsvorgang gewonnen werden, insbesondere durch eine Fuzzy-Interpolation. So ergibt sich ein Betrieb des Leitsystems nahe am optimalen Betriebspunkt auch bei Ausfall oder Fehlfunktion des intelligenten Teils des Leitsystems.

Es ist weiterhin vorgesehen, daß die Vorgabewerte für das Basis-Funktionssystem und das Grundwissen laufend auch durch externe Simulationsrechnungen, Modellversuche o.ä. verbessert werden, insbesondere in Anpassung an Änderungen der verwendeten technischen Mittel in den Anlagenkomponenten oder an einen veränderten Anlagenaufbau. So ist eine Anpassung an den Fortschritt der Technik jederzeit möglich, wobei der modulare Aufbau des Leitsystems sich besonders günstig auswirkt. Die externen Simulationsrechnungen, Modellversuche etc. können dabei insbesondere dabei helfen festzustellen, ob und wie sich Anlagenverbesserungen in einer entsprechenden Produktverbesserung niederschlagen können.

Die Grundidee des vorstehend geschilderten Leitsystems mag für autonom bewegliche Dienstleistungs-Roboter o.ä. naheliegend erscheinen. Einem Wunschdenken entsprechend sollen diese menschliche Verhaltensweisen aufweisen. Für stationäre industrielle Anlagen, die um ein Vielfaches komplexer sind und fortlaufend ein optimales Produktionsergebnis sicher erzielen müssen, lagen derartige Ideen jedoch bisher fern. Insbesondere, da für industrielle Anlagen, in denen komplexe Prozesse ablaufen, im Gegensatz zu Dienstleistungsrobotern o.ä., ein intelligentes Verhalten nicht aus der menschlichen Verhaltensweise ableitbar ist.

Die Erfindung wird anhand von Zeichnungen näher erläutert, aus denen weitere, auch wesentliche, erfinderische Einzelheiten ebenso wie aus den Unteransprüchen entnehmbar sind. Die Zeichnungen zeigen, stellvertretend für andere industrielle Prozesse, einen Bandgießprozeß für Stahl mit seiner Leitsystemstruktur und dem für diesen Prozeß spezifische Modell sowie Einzelheiten der Basisautomatisierung.

Im einzelnen zeigen:

FIG 1    eine schematisierte Darstellung der Bandgießanlage mit Meßdatenerfassung und Stellgrößenausgabe,
FIG 2    die Struktur des "intelligenten" Teils des Leitsystems mit der Sollwert-Vorgabebildung,
FIG 3    Einzelheiten des Prozeßoptimierers,
FIG 4    Einzelheiten des Adaptionsvorgangs,
FIG 5    wesentliche Bestandteile des Prozeßmodells und ihre Grob-Verknüpfungsstruktur,
FIG 6    erfindungswesentliche Teile des Datenspeichers und
FIG 7    ein Komponenten-Schema der Basisautomatisierung.

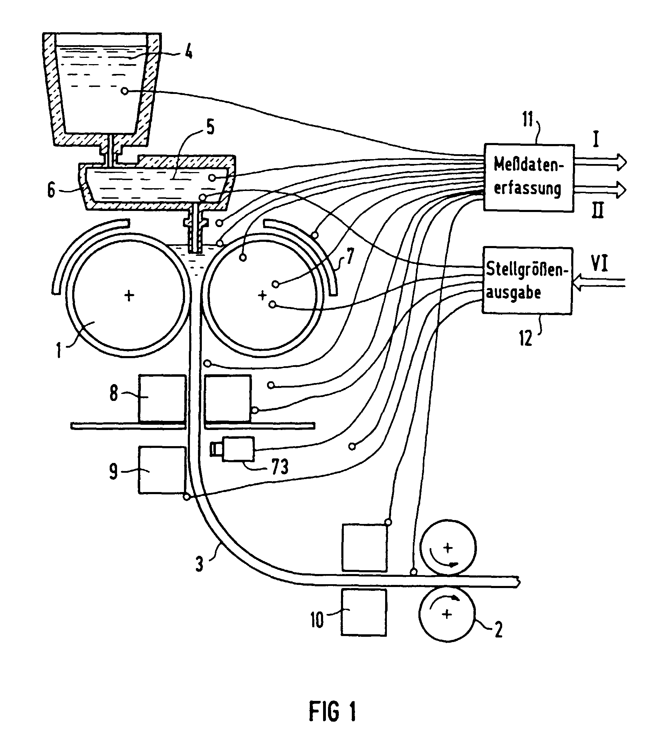

In FIG 1 bezeichnet 1 die Gießwalzen einer Zweiwalzen-Gießeinrichtung, wobei zwischen den Gießwalzen 1 das Material, etwa flüssiger Stahl, aus der Gießpfanne 4 über den Tundish 5 und ein Tauchrohr 6 eingegeben wird und zu einem Band 3 erstarrt, das in einer, durch die Kreise 2 mit Bewegungspfeilen symbolisierten, Walzanlage weiterverformt werden kann. Die nachgeschaltete Walzanlage kann auch einfach durch Förderrollen, eine Haspel o. ä. ersetzt werden, wenn das Auswalzen nicht unmittelbar nach dem Gießen erfolgen soll. Die Ausgestaltung der Gesamtanlage wird anforderungsspezifisch vorgenommen. Auch eine Ausbildung der, der Gießeinrichtung nachgeschalteten, Anlage als Warm-Kalt-Walzwerk ist möglich und bei sehr hohen Gießgeschwindigkeiten empfehlenswert, da dann auch der Kalzwalzteil der Anlage ausreichend ausgelastet sein kann.

Zwischen den Gießwalzen und den nachgeschalteten Einrichtungen weist die Gießwalzeinrichtung vorzugsweise ein ebenfalls nur symbolisch dargestelltes elektrodynamisches System 8,9 und ein Induktionsheizsystem 10 auf. Der elektrodynamische Systemteil 8 dient dabei vorteilhaft der Gewichtsentlastung, des gegossenen, hier noch sehr weichen und damit einschnürungsgefährdeten, Bandes 3 und der elektrodynamische Systemteil 9 der Führung des Bandes 3, während dem Induktionsheizsystem 10 die Einhaltung eines vorherbestimmten Temperaturprofils über die Bandbreite obliegt, wenn sich z.B. eine direkte Nachverformung in einer Walzanlage anschließt. Dies ist insbesondere für rißempfindliche Stähle vorteilhaft. Die Kontrolle des gegossenen Bandes 3 auf Risse erfolgt durch eine Kamera 73, wobei vorteilhaft ausgenutzt werden kann, daß das Rißbild im Zunder durch Risse im Grundmaterial beeinflußt wird. Die Bildung einer Meßgröße erfolgt dabei vorteilhaft durch ein Neuro-Fuzzy-System.

Da die Oberflächentemperatur der Gießwalzen zur Vermeidung von Temperaturwechselbeanspruchungen im wesentlichen konstant sein soll, werden diese durch ein IR-Heizsystem 7, ein Induktionsheizsystem o.ä. auch in dem, nicht mit flüssigem Stahl in Berührung stehenden Bereich, auf Arbeitstemperatur gehalten. Diese und andere Einzelkomponenten der, nur grob schematisch gezeichneten, Gießwalzeinrichtung werden z.B. über Temperaturregler, Durchflußeinsteller, Drehzahlregler etc. im Rahmen der Basisautomatisierung über eine Stellgrößenausgabe 12 direkt oder geregelt eingestellt. Die Ist-Daten der Stellglieder, der Regler etc. werden in der Meßdatenerfassung 11 für den Datenspeicher und den Modelleingang sowie in nicht gezeigter Weise für die Basisautomatisierung zusammengefaßt und aufbereitet. Durch die Datenübertragungen I,II und VI, die durch Pfeile symbolisiert sind, ist die Gießwalzeinrichtung, in der die auf den beiden Gießwalzen 1 gebildeten Erstarrungsschalen des Stahls nicht nur vereinigt, sondern auch schon walzend vormaßhaltig geformt werden, mit dem intelligenten Teil des Leitsystems verbunden.

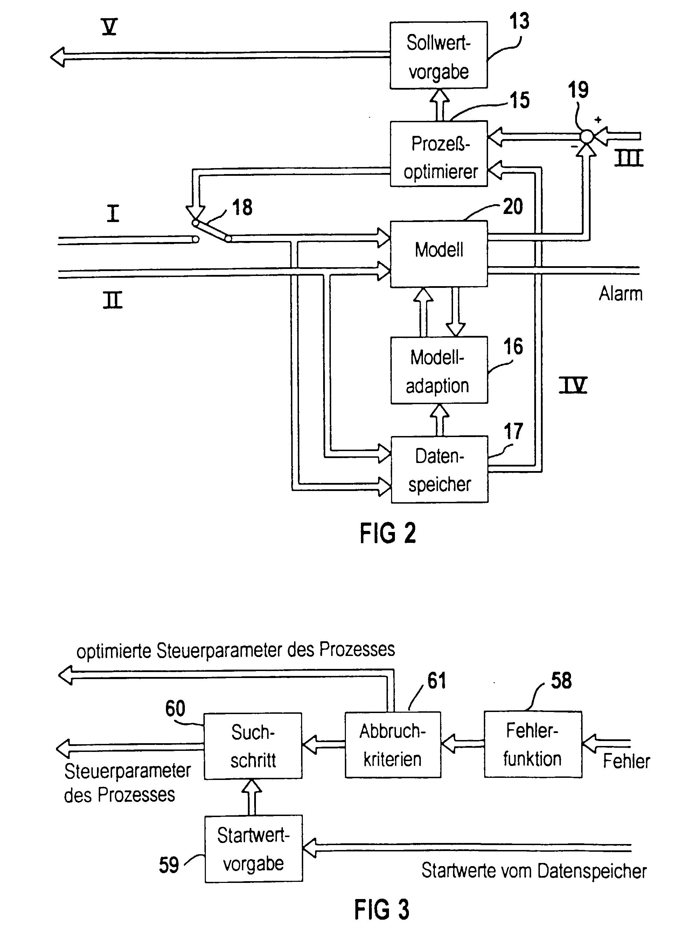

FIG 2 zeigt die Struktur des intelligenten Teils des Leitsystems. Dieser besteht im wesentlichen aus den Teilen Prozeßoptimierer 15, Modell 20, Modelladaption 16 und Datenspeicher 17. Diese Teile des Leitsystems wirken derart zusammen, daß über die Sollwertausgabe 13 möglichst gute, situationsgerechte Anweisungen über die Datenleitung V zur Prozeßführung zur Verfügung gestellt werden. Diese Anweisungen werden dann in Sollwerte für die Basisautomatisierung umgesetzt. Im folgenden wird die Aufgabe und die Funktion der einzelnen Teile beschrieben.

Das Modell 20 bildet das statische Prozeßverhalten

$$y_i = f_i(u_1, ..., u_i, ..., v_1, ..., v_i, ...),$$

d.h. die Abhängigkeit der n Modellausgangsgrößen $\tilde{y}_i$ von den Stellgrößen $u_i$, mit denen der Prozeß beeinflußt werden kann, und von den nichtbeeinflußbaren Prozeßgrößen $v_i$, wie z.B. der Kühlwassertemperatur, nach. Die Modellausgangsgrößen sind dabei, wie schon erwähnt, typische Qualitätsparameter des Produktes. Die Modellbeschreibung

$$\tilde{y}_i = \tilde{f}_i(u_1, ..., u_i, ..., v_1, ..., v_i, ...)$$

erfaßt das Prozeßverhalten im allgemeinen nicht exakt, weshalb $y_i$ und $\tilde{y}_i$ mehr oder weniger voneinander abweichen. Übertragen werden die Stellgrößen $u_i$ und die nichtbeeinflußbaren Stellgrößen $v_i$ über die Datenleitungen I und II.

Die Modelladaption 16 hat die Aufgabe das Modell zu verbessern, damit das Modellverhalten möglichst gut dem Prozeßverhalten entspricht. Dies kann - zumindest für Modellteile - on-line geschehen, indem diese Modellteile auf der Basis von laufend erfaßten Prozeßdaten adaptiert oder nachgeführt werden.

Für andere Modellteile kann die Adaption auch off-line zu bestimmten Zeitpunkten vorgenommen werden. Dies geschieht auf der Basis einer Anzahl m von den Prozeß repräsentierenden Prozeßzuständen $(u_i^k, v_i^k, y_i^k)$, die im Datenspeicher 17 abgelegt sind. Der Index k beziffert den jeweiligen Prozeßzustand. Bei dieser Art der Adaption wird der Modellfehler

$$\varepsilon = \sum_{k=1}^{m} \sum_{i=1}^{n} (y_i^k - \tilde{y}_i^k)^2$$

$$= \sum_{k=1}^{m} \sum_{i=1}^{n} \left( f_i(u_1^k, ..., u_i^k, ..., v_1^k, ..., v_i^k, ...) - \tilde{f}_i(u_1, ..., u_i, ..., v_1, ..., v_i, ...) \right)^2$$

minimiert in Abhängigkeit von den Modellparametern oder der Modellstruktur. D.h. man variiert die Modellparameter bzw. die -struktur so, daß $\varepsilon$ möglichst klein wird.

Der Prozeßoptimierer hat die Aufgabe, mittels eines Optimierungsverfahrens und des Prozeßmodells Stellgrößen $u_i$ zu finden, die zu einem möglichst guten Prozeßverhalten führen. Der Prozeßoptimierer arbeitet off-line zu bestimmten, beispielsweise manuell vorgebbaren Zeitpunkten und zwar wie folgt:

Zuerst werden die nichtbeeinflußbaren Stellgrößen $v_i$, für die die Optimierung erfolgen soll - z.B. die aktuellen - , konstant gehalten und dem Modell über die Datenleitung II zugeführt. Sodann wird mittels Schalter 18 der Prozeßoptimierer mit dem Modell verbunden. Er gibt Stellwerte $u_i$ auf das Modell. Über das Modell werden die Ausgangswerte $\tilde{y}_i$, bestimmt. Diese werden mit Sollausgangswerten $y_{Soll,i}$ verglichen, und es wird der Fehler

$$E = \sum_{i=1}^{n} (y_{Soll,i} - \tilde{y}_i)^2$$

bestimmt.

Der Fehler E soll minimiert werden. Zu diesem Zweck variiert der Prozeßoptimierer die Stellgrößen $u_i$ solange in einer iterativen Schleife, die jeweils die Berechnung von $y_i$ und E sowie die Neuauswahl von $u_i$ enthält, bis der Fehler nicht weiter verringert werden kann oder man diese Optimierung abbricht. Als Optimierungsverfahren können beispielsweise genetische Algorithmen, Hill-Climbing-Methoden etc. eingesetzt werden.

Die so erhaltenen optimalen Stellgrößen $u_{opt,i}$, die das Ergebnis obiger Minimierung sind, werden dann über die Sollwertvorgabe und die Datenleitung V als Sollwerte zum Basisfunktionssystem transferiert.

Der Datenspeicher hat die Hauptaufgabe repräsentative Prozeßzustände $(u_i, v_i, y_i)$ zu archivieren. Hierbei ersetzt er alte Prozeßdaten immer wieder durch neu ermittelte, um anhand dieser Daten eine aktuelle, wenn auch punktuelle, Prozeßbeschreibung zu ermöglichen. Der Datenspeicher versorgt dann einerseits, wie oben beschrieben, die Modelladaption. Andererseits liefert er auch Startwerte $u_i$ für den Prozeßoptimierer. Die Startwerte werden hierbei z. B. so ausgewählt, daß die zu diesen Startwerten gehörenden Ausgangswerte $y_i$ möglichst gut den Sollwerten $y_{Soll,i}$ entsprechen.

Die vorzugsweise off-line arbeitende Schleife: Modell 20 und Prozeßoptimierer 15, die sich etwa z.B. genetischer Algorithmen zur z.B. evolutionären, Modellverbesserung bedient, arbeitet vorzugsweise deswegen off-line, weil wegen der Komplexität eines Anlagenleitmodells mit seinen vielen möglichen Ausgestaltungen die Rechenzeit eines evolutionären Optimierungsvorgangs vergleichsweise lang wird. Auch bei guten Optimierungsstrategien, die z.B. aufgrund einer Analyse des wahrscheinlichen Modellverhaltens ausgewählt werden, sind viele Optimierungsvorgänge bis zum Erreichen einer deutlichen Modellverbesserung durchzurechnen.

Die Erstellung einer erfindungsgemäß zu verwendenden Modellstruktur und eines wesentlichen Teilmodells wird z.B. in dem Aufsatz "Automation Of A Laboratory Plant For Direct Casting Of Thin Steel Strips" von S. Bernhard, M. Enning and H. Rabe in "Control Eng. Practice", Vol.2, No.6, page 961-967, 1994, Elsevier Science Ltd. beschrieben. Aus dieser Veröffentlichung sind u.a. auch die Grundstrukturen geeigneter Basisautomatisierungssysteme und von Startroutinen zu ersehen, auf denen der Fachmann aufbauen kann.

Als Rechner für die Prozeßoptimierung und die Parameter-adaption sind Workstations, z.B. von der Firma Sun, geeignet. Für große Leitsysteme werden vorteilhaft parallel arbeitende Rechner eingesetzt. Dies gilt insbesondere, wenn das Modell in Gruppen von Modell-Modulen aufteilbar ist, die teilabhängig voneinander optimiert werden können.

Im Vergleichspunkt 19, in den die Sollwerte, im gewählten Ausführungsbeispiel die Sollwerte für die Banddicke, die Profilform, die Oberflächengüte des Bandes etc. einfließen, werden laufend die Ergebnisse aus der Modellrechnung mit den Sollwertvorgaben verglichen. Die Differenz ist durch die Optimierung zum minimieren. Da die Differenz bei technischen Prozessen im allgemeinen nicht Null werden kann, muß der Optimierungsvorgang sinnvoll begrenzt, also vorgegeben abgebrochen werden. Genauere Einzelheiten der Programmstruktur, mit der die Optimierung abgebrochen und jeweils die neue Sollwertausgabe gestartet wird, zeigt FIG 3.

In FIG 3 bezeichnet 58 eine, jeweils auszuwählende, Fehlerfunktion, in die die festgestellten Fehler (Sollwertabweichungen) einfließen. In 61 wird nun untersucht, ob die Fehlerfunktion die Abbruchkriterien der Optimierung erfüllt. Falls dies der Fall ist, werden weiter optimierte Steuer- und Regelgrößen ausgegeben. Vor Erreichen des Abbruchkriteriums gelangen laufend Startwerte vom Datenspeicher in die Startwertvorgabe 59, aus denen in Suchschritten in 60, nicht vom Optimierer, sondern aus dem Datenspeicher, z.B. unter Zuhilfenahme einer Fuzzy-Interpolation, Steuer- und Regelparameter für eine suboptionale Prozeßführung gewonnen werden. Eine Umschaltung erfolgt nach Erreichen des vorherbestimmten Gütefaktors, der dem jeweiligen Leitsystem-Wissensstand angepaßt wird. Wie bereits vorstehend gesagt, wird die Minimierung, die ja niemals absolut sein kann, bei Erreichen des vorgegebenen Gütefaktors abgebrochen.

Aus dem Modell wird im übrigen vorteilhaft, wenn es an den Prozeß angeschlossen, d.h. Schalter 18 geschlossen ist, auch ein Alarmsignal generiert, welches das Erreichen kritischer Betriebszustände signalisiert. Derartige Prozeduren sind bereits bekannt und finden sich in gleicher Weise auch in konventionellen Leitsystemen.

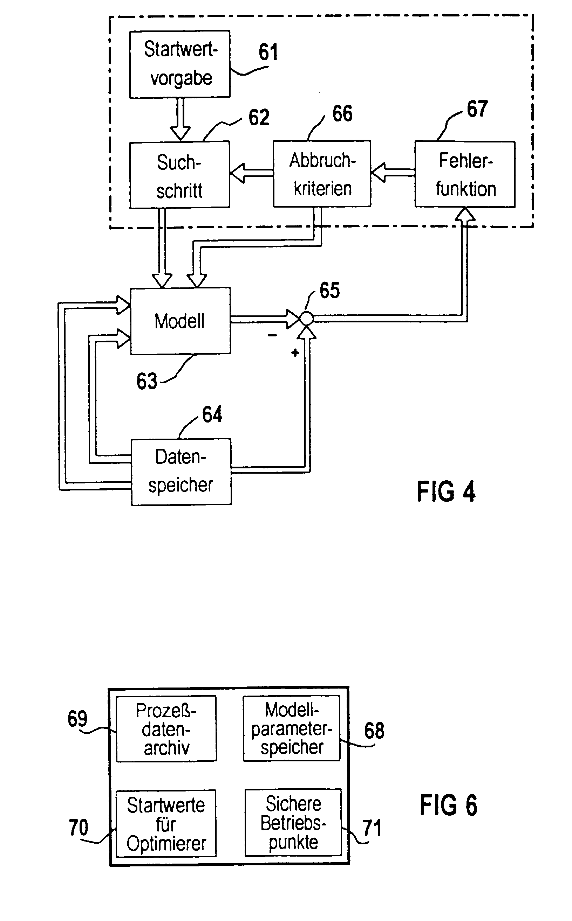

In FIG 4, die die Struktur einer Modelladaption mittels eines Optimierungsalgorithmus zeigt, gelangen Daten aus der Startwertvorgabe 61 in eine Suchschritteinheit 62 und werden von dort als Modellparameter an das Modell 63 weitergegeben. Das Modell 63 bildet zusammen mit dem Datenspeicher 64 eine Parameterverbesserungsschleife, die in 65 in bekannter Weise die gebildeten und gespeicherten Werte vergleicht. Die Vergleichswerte werden der Fehlerfunktion 67 zugeführt, die ihre Werte an die Abbruchkriterieneinheit 66 weitergibt. Sind die Abbruchkriterien erfüllt, wird das Modell nicht mehr weiter verbessert und mit den vorhandenen Werten gearbeitet. Sonst wird die Optimierung mit weiteren Suchschritten und den Zwischenwerten im Datenspeicher weitergeführt.

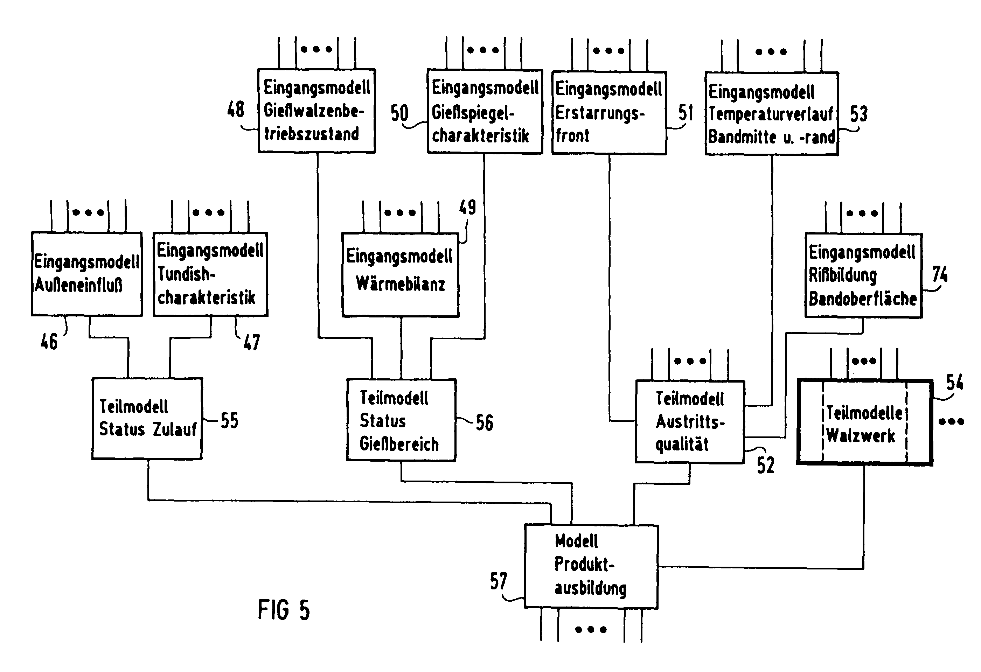

In FIG 5, die die wesentlichen Teilmodelle des Prozeßgesamtmodells des Ausführungsbeispiels zeigt, bezeichnet 46 das Eingangsmodell, in dem die Außeneinflüsse, etwa die Einflüsse aus der Qualität des eingesetzten Materials, zusammengefaßt sind. Aus der Stahl-Einsatzqualität ergibt sich z.B. der Liquiduswert, der Soliduswert, sowie weitere, das Gießverhalten kennzeichnende Größen. 47 bezeichnet das Tundishmodell, in das z.B. das Stahlvolumen des Tundish, die Tauchrohrstellung o.ä., die Stopfenstellung und die Stahl-Ausflußtemperatur eingehen. Die Eingangsmodelle 46 und 47 werden im Teilmodell 55 zusammengefaßt, das den Status des zugeführten Materials wiedergibt. Derartige Teilmodelle können vorteilhaft parallel zu anderen Teilmodellen, etwa dem Gießbereichsmodell, dem Walzbereichsmodell o.ä. optimiert werden.

Das Eingangsmodell 48 enthält die Einflüsse, die die Erstarrung beeinflussen, z.B. die Gießwalzenkühlung, die Infrarotheizung etc., Das Eingangsmodell 49 enthält die Werte, die für die Wärmebilanz notwendig sind, so die Stahl-Gießwalzen-Temperaturdifferenz, den Schmiermitteleinfluß als Funktion der Schmiermittelmenge, die Kristallbildungsgeschwindigkeit der jeweiligen Stahlsorte sowie z.B. den Walzenoberflächenzustand. Das Eingangsmodell 50 enthält z.B. die Einflüsse der Gießspiegelcharakteristik, so die Gießspiegelhöhe, die Schlackenschichtdicke und den Abstrahlungskoeffizienten. Die Eingangsmodelle 48,49 und 50 sind zu einem Teilmodell 54, das den Status Gießbereich wiedergibt, zusammengefaßt. Diese Modellbereichs-Zusammenfassung ist allgemein für Produktionsbereiche vorteilhaft, da sie die Gesamt-Modelloptimierung vereinfacht und verbessert. Unter sich sind die Teilmodelle z. T. noch voneinander abhängig, so etwa in erheblichem Maß die Eingangsmodelle 49 (Eingangsmodell Wärmebilanz) und 50 (Eingangsmodell Gießspiegelcharakteristik). Sekundärabhängigkeiten sind zur Vereinfachung nicht dargestellt.

Das Teilmodell 51 enthält alle Einflüsse auf die Erstarrungsfront, d.h. auf den Bereich, in dem die auf den beiden Kühlwalzen erstarrten Metallschalen zusammentreffen. Im wesentlichen sind diese Einflüsse die Umformarbeit, die von den Gießwalzen geleistet wird, die Vibrationsweite der Gießwalzen oder des austretenden Bandes, die Seitenspalt-Dichtungseinflüsse und der Anstrengungsgrad des Gesamtsystems, dies ist z.B. ein Fuzzy-Modell. Das Teilmodell 52 gibt die Austrittswerte wieder, so z.B. die Qualität des Bandes, die Austrittstemperatur- und Verteilung, aber auch die Klebeneigung und den Zustand des gebildeten Zunders. In das Teilmodell 52 geht auch das Eingangsmodell 53 und das Eingangsmodell 74 ein, die sich auf den Temperaturverlauf quer zum Band und auf den Oberflächenzustand des Bandes beziehen. Für den besonders vorteilhaften Fall, daß es sich um ein Bandgieß-Walzwerk handelt, gehen auch die Walzwerksteilmodelle 54 mit in dieses spezielle Prozeßmodell ein, da die Produktausbildung nach dem Austritt aus den Walzgerüsten das entscheidende Kriterium ist.

Die Teilmodelle sind zu dem Produkt-Ausbildungsmodell 57 zusammengefaßt, welches das Dickenprofil des gebildeten Bandes, die Banddicke, ein evtl. auftretendes Fehlerbild, die Kornstruktur des Bandes, die Oberflächenstruktur etc. zusammenfaßt. Die Oberflächenstruktur und insbesondere die Kornstruktur des Bandes sind nur mit erheblicher Zeitverzögerung ermittelbar. Hier arbeitet man daher vorteilhaft mit Teilmodellen auf der Basis von neuronalen Netzen zur qualitativen und quantitativen Einflußgrößenermittlung.

Aus der vorstehenden Darstellung ergibt sich der besondere Vorteil, der sich aus der Ausbildung des Modells in Modulform ergibt, da insbesondere so die Teile eines komplexen Gesamtprozeßmodells parallel bearbeitbar werden. Dies ist besonders vorteilhaft für den Inbetriebsetzungszeitraum einer Anlage, in dem die Eingangs- und Teilmodelle den tatsächlichen Verhältnissen angepaßt, miteinander verknüpft etc. werden müssen.

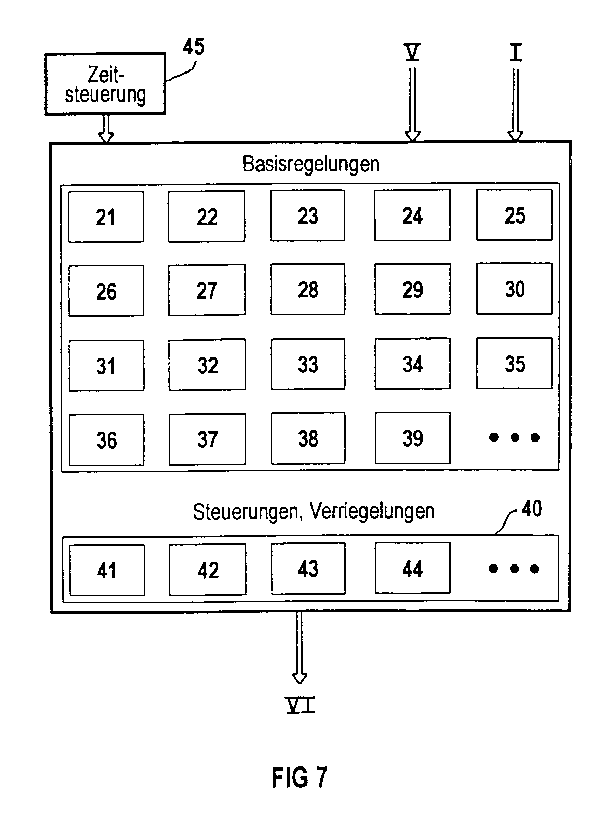

FIG 6 zeigt schließlich den erfindungsgemäß wesentlichen Teil der Datenspeicherstruktur. 68 bezeichnet das Prozeßdaten-archiv , 69 den Modellparameterspeicherteil, 70 den Teil mit den Startwerten für den Optimierer und 71 den Speicherteil für die sicheren Betriebspunkte. In 68 wird auch die jeweilige Modellausbildung gespeichert.

Die Basisautomatisierung, die mit ihren Regelungen, Steuerungen, Verriegelungen etc., einen unverzichtbaren Teil des Leitsystems bildet, da sie u.a. das sichere Funktionieren der Anlage auch bei einer Fehlfunktion des Modellteils des erfindungsgemäß arbeitenden Leitsystems garantiert, muß eine Vielzahl von Funktionen erfüllen.

Die einzelnen Funktionen sind, nicht abschließend, durch die einzelnen "black box" in FIG 7 symbolisiert. Dabei bedeutet 21 im Ausführungsbeispiel die Massenflußregelung über die Einzel-Drehzahlregler, 22 die Regelung der Tundish-Heizung, 23 die Gießspiegelregelung, 24 die Tundish-Ausflußregelung und 25 die Heizleistung des Infrarot- o.ä. Schirms 7 für die Aufrechterhaltung der Betriebstemperatur der Gießwalzen. 26 bedeutet die Regelung der Schmiermittelzugabe, z.B. in Form von losem Gießpulver oder von auf die Gießwalzen aufgetragener Gießpulverpaste, 27 die Kühlwassermengenregelung, 28 ggf. die Walzenoszillationsregelung, 29 die elektrische Antriebsregelung und 30 die Walzspalteinstellung. 31 bedeutet die Walzendrehzahlregelung und 32 ggf. die Regelung des Walzendrehmoments, 33 die Einstellung des Reinigungssystems, bestehend beispielsweise aus einer Bürste und einem Schaber für die Gießwalzen und 34 die Regelung des elektrodynamischen Systems zum Ausgleich des Bandgewichtes sowie 35 die Regelung der Vibrationsweite des gegossenen Bandes. 36 bedeutet die Regelung der einzelnen Teile eines elektrodynamischen Systems zur Seitenspaltabdichtung und 37 die Regelung der Heizung für die Seitenwände des Raumes zwischen den Gießwalzen. 38 bedeutet die Temperatur-Profilregelung des Induktionsheizsystems 10. 39 sowie angedeutete weitere Regeleinheiten beziehen sich auf Regelungen der nachgeschalteten Verformungseinheiten, z.B. Walzgerüsten, den Zug zwischen diesen Walzgerüsten etc. Auf die vorstehenden Stellglieder, Regler etc. wirkt die Zeitsteuerung 45, die die Stellgrößenausgaben etc. zeitlich koordiniert. Im Block 40 sind beispielhaft die Hilfs-Steuerungen und die Verriegelungen zusammengefaßt, so bedeuten z.B. 41 die Anfahrautomatik, 42 die Ausschaltautomatik, 43 und 44 Verriegelungen, die z.B. verhindern, daß Flüssigstahl fließen kann, bevor das Gieß-Walzenpaar und die Verformungswalzen arbeitsfähig sind, etc. Darüber hinaus sind weitere, in dem Prinzipbild nicht dargestellte, Systeme für die ggf. erforderliche Bandkantenabtrennung, z.B. durch Laser, für die Zunderausbildungsbeeinflussung, z.B. durch Silikatisierung, die Walzenschmierung etc. vorhanden. In der Basisautomatisierung, in die die Meßdaten I und die Sollwertvorgaben V eingehen, werden die Stellgrößen VI generiert, über die die Anlage geführt wird.

Die Charakteristik des sich selbst optimierenden und wissensmäßig weiterentwickelnden Leitsystems, am Beispiel des Gießwalzprozesses gezeigt, werden im folgenden näher erläutert:

Der Gießwalzprozeß besteht aus einer Anzahl von Teilprozessen, deren Ausbildung und Einflüsse ausschlaggebend für das Endprodukt sind. Erfindungsgemäß beeinflußbar und optimierbar sind dabei die Eigenschaften des Endproduktes, z.B. seiner Dicke, seinem Dickenprofil und seiner Oberflächenausbildung, durch eine Reihe einstellbarer Prozeßgrößen, wie z.B. dem Gießwalzspalt, dem Gießwalzenprofil, der Gießspiegelhöhe etc., die wiederum die Lage der Vereinigungszone der auf den Gießwalzen abgeschiedenen, erstarrten Metallschalen beeinflussen. Für eine Regelung und Optimierung wird vorteilhaft erfindungsgemäß ein Gesamtprozeßmodell erstellt, welches das Prozeßverhalten beschreibt. Auf der Basis dieses Prozeßmodells können die Einflußgrößen, mit denen man den Prozeß beeinflußt, schrittweise entsprechend den Prozeßbedingungen angepaßt und optimiert werden. Die durch diese Optimierung bestimmten situationsgerechten Anweisungen führen dann zu einer Verbesserung des Prozeßgeschehens. Insgesamt ergeben sich trotz der bei der Erstellung relativ aufwendigen, (aber mit geringerem Aufwand auch bei anderen Anlagen weiterverwendbaren), Software erhebliche Kostenvorteile, da die Anlage mit wesentlich einfacheren mechanischen Komponenten, weniger Reglern etc. arbeiten kann, als die bekannten Anlagen. Auch die Sensorik wird wesentlich einfacher, da nur die Prozeßausgangsgrößen laufend genau erfaßt werden müssen.

Zusammengesetzt ist der intelligente, sich selbständig verbessernde, Teil des Leitsystems aus drei wesentlichen Elementen: Dem Prozeßmodell, der Modelladaption und dem Prozeßoptimierer. Das Prozeßmodell setzt sich aus Teilsystemen (Modulen) zusammen, die je nach Prozeßkenntnis von unterschiedlichem Typ sein werden. Bei Kenntnis der physikalischen Zusammenhänge können klassische, physikalisch-mathematische Modelle erstellt werden. Verfügt man dagegen nur über Erfahrungswissen oder Schätzungen, so werden Fuzzy- oder Neuro-Fuzzy-Systeme verwandt. Falls man nur wenig oder nichts über das Prozeßverhalten weiß, wie etwa bei der Rißbildung und der Oberflächenausbildung setzt man, zumindest am Anfang, neuronale Netze für die Prozeßbildung ein. Insgesamt beschreibt das Modell den Zusammenhang zwischen den Prozeßgrößen, wie im gewählten Beispiel der Gießspiegelhöhe, den Zustandswerten und der Qualität des vergossenen Materials, den Einstellwerten der Gießwalzen etc. und den Qualitätsparametern des Bandes, z.B. der Dicke, dem Profil und der Oberflächenausbildung.

Da das Modell zu einem bestimmten, u.U. erheblichen, Prozentsatz auf unsicherem Wissen gründet, ist es nicht genau. Das Modell muß also anhand gewonnener Prozeßdaten adaptiert, verändert etc. werden. Dies geschieht vorteilhaft einerseits mittels der bekannten Modelladaption, die auf Daten vergangener Prozeßzustände aufsetzt. Auf Basis dieser Daten stellt sie die Modellparameter o.ä. so ein, daß das Modellverhalten möglichst gut dem des Prozesses entspricht. Außerdem werden die Modelle selbst verändernd optimiert, so z.B. durch genetische Algorithmen, eine kombinatorische Evolution etc. Entsprechende Optimierungsstrategien sind bekannt, z.B. aus Ulrich Hoffmann, Hanns Hofmann "Einführung in die Optimierung", Verlag Chemie GmbH, 1971 Weinheim / Bergstraße; H.P. Schwefel "Numerische Optimierung von Computer-Modellen mittels der Evolutionsstrategie, Basel, Stuttgart : Birkhäuser 1977; Eberhard Schöneburg "Genetische Algorithmen und Evolutionsstrategien, Bonn, Paris, Reading, Mass, Addison-Wesley, 1994; Jochen Heistermann "Genetische Algorithmen: Theorie und Praxis evolutionärer Optimierung, Stuttgart, Leipzig, Teubner, 1994 (Teubner-Texte zur Informatik; Bd 9)

Durch das erfindungsgemäße Leitsystem mit dem vorstehend beschriebenen erfindungsgemäßen Vorgehen wird die bisherige Aufbaustruktur eines Leitsystems verlassen. Über einer Basisautomatisierung, die im wesentlichen die Prozeßebene betrifft (Level I), befindet sich ein nur einstufiges, intelligentes Leitsystem, dem die Produktionssollwerte vorgegeben werden und das daraus selbsttätig alle Vorgabegrößen (Stellbefehle) generiert (Level II). In intelligenter Selbstoptimierung sorgt es aufgrund des bereits erreichten Prozeßergebnisses für immer bessere Prozeßergebnisse. Einzelne Feed-Back-Regelkreise können entfallen. Nur für die Kontrolle der Prozeßergebnisse sind qualitätskontrollierende Sensoren notwendig. Das erfindungsgemäße Leitsystem besitzt also nur noch zwei wesentliche Ebenen, von denen die intelligente Ebene außer etwa zur Programmierung keiner Visualisierung bedarf. Zur Kontrolle können aber die Elemente der Basisautomatisierung in bekannter Weise visualisiert werden.

**Patentansprüche**

1. Intelligentes Rechner-Leitsystem für Anlagen mit mehreren Anlagenteilen, in denen technische oder biologische Prozesse zielgerichtet ablaufen, z.B. Produktionsanlagen für Güter oder Energie, Kommunikationseinrichtungen etc., das aufbauend auf eingegebenem und - in einer Recheneinrichtung für die Anlage - selbst generiertem Wissen den jeweiligen Zustand der in den Einrichtungsteilen ablaufenden Prozesse, z.B. von kontinuierlichen Herstellungsprozessen, Arbeitsverfahren etc. anhand der Prozeßendergebnisse selbsttätig erkennend und situationsgerecht zum Erreichen des Prozeßziels für die Anlagenteile rechentechnisch in Modellgenauigkeit ermittelte und an den tatsächlichen Prozeßzustand adaptierte Anweisungen in Form von Sollwerten für die Führung der Anlagenteile gebend, ausgebildet ist, wobei das eingegebene, vorzugsweise in technologisch oder ggf. biologisch basierten Algorithmen, eingegeben wird, wobei in das eingegebene und selbst generierte Wissen das situationsbedingte Verhalten und Wirken der Komponenten der Einrichtung während des Prozeßablaufs einbezogen ist und wobei der Zustand von in den Anlagenteilen ablaufenden Prozessen und/oder einzelner Teilprozesse zur Adaptierung und ggf. Optimierung fortlaufend anhand von - auch in der Recheneinrichtung selbsttätig generierten - Prozeßmodellen simuliert wird, die modular aufgebaut sind und die das Verhalten zwischen den Prozeßeingangsgrößen sowie variablen Größen und den Prozeßausgangsgrößen, z.B. Qualitätskennwerten, beschreiben.

2. Leitsystem nach Anspruch 1,
**dadurch gekennzeichnet,**
daß die situationsgerechten Anweisungen rechentechnisch aus einer Prozeßnachbildung (Modell) in einem Rechner gewonnen werden, das insbesondere die Wirkung von Änderungen von Prozeßvariablen auf das Prozeßergebnis beschreibt.

3. Leitsystem nach Anspruch 1 oder 2,
**dadurch gekennzeichnet,**
daß der Prozeßnachbildung (Modell) die Prozeßeingangsbedingungen aufgegeben und daraus situationsgerecht Anweisungen zum Erreichen des Prozeßziels generiert werden.

4. Leitsystem nach Anspruch 1, 2 oder 3
**dadurch gekennzeichnet,**
daß es die situationsgerechten Anweisungen anhand einer Adaption des Modells erzeugend, dabei vorzugsweise selbsttätig in vorgegebenen Routinen arbeitend, ausgebildet ist.

5. Leitsystem nach Anspruch 4,
**dadurch gekennzeichnet,**
daß es laufend eine Optimierung, insbesondere eine schrittweise Optimierung, des Modells, vorzugsweise eines algorithmischen Prozeßmodells, durchführt.

6. Leitsystem nach Anspruch 5,
**dadurch gekennzeichnet,**
daß die Optimierung durch ausgewählte Trial- und Error-Routinen am Prozeßmodell unter ständiger Erfolgskontrolle erfolgt.

7. Leitsystem nach Anspruch 1, 2, 3, 4, 5 oder 6,
**dadurch gekennzeichnet,**
daß das eingegebene und selbst generierte Wissen, vorzugsweise selbsttätig, laufend durch am Modell, z.B. bei unterschiedlichen Anforderungen an den Prozeß, intern rechentechnisch gewonnenes Wissen verbessert und dieses selbst generierte Prozeßwissen als eingegebenes und selbst generiertes Wissen in einen, insbesondere ständig aktualisierten, Datenspeicher übernommen wird.

8. Leitsystem nach einem der Ansprüche 1 bis 7,
**dadurch gekennzeichnet,**
daß die Prozeßmodelle zumindest teilweise, soweit sie auf Basis mathematisch-physikalischer, chemischer, metallurgischer, biologischer o.ä. Gesetzmäßigkeiten modelliert werden können, mathematische Beschreibungsformen aufweisen.

9. Leitsystem nach einem der Ansprüche 1 bis 8,
**dadurch gekennzeichnet,**
daß die Prozeßmodelle für die Anlagenkomponenten, für die Prozeßwissen vorliegt, das linguistisch ausgedrückt werden kann, linguistisch formulierte Modellteile aufweisen, die z.B. durch Fuzzy-Systeme, Neuro-Fuzzy-Systeme, Experten-systeme oder Tabellenwerke realisiert sein können.

10. Leitsystem nach einem der Ansprüche 1 bis 9,
**dadurch gekennzeichnet,**
daß die Prozeßmodelle für die Anlagenkomponenten, für die keine Modellbildung auf Basis mathematisch-physikalischer, biologischer oder metallurgischer Grundlagen oder aufgrund von linguistisch beschreibbarem Prozeßwissen möglich ist, selbstlernende oder sich selbstlernend selbststrukturierende Systeme, z.B. neuronale Netze, aufweisen.

11. Leitsystem nach einem der Ansprüche 1 bis 10,
**dadurch gekennzeichnet,**
daß die Prozeßmodelle aufgrund von gesammelten Prozeßdaten, die in der Prozeßdatenbank archiviert werden, dem Prozeß fortlaufend angepaßt oder nachgeführt werden und daß dies mittels adaptiver Verfahren oder Lernverfahren, z.B. durch ein Backpropagation-Lernverfahren oder ein Auswahlverfahren für verschiedene Teilmodelle, etwa neuronale Netze, geschieht.

12. Leitsystem nach einem der Ansprüche 1 bis 11,
**dadurch gekennzeichnet,**

daß die Prozeßmodelle , vorzugsweise off-line, durch eine Modelladaption derart adaptiert werden, daß die Modellausgangsgrößen, die insbesondere Qualitätskennwerte des Prozeßergebnisses sind, möglichst gut mit vorgegebenen, z.B. den anzustrebenden Werten, übereinstimmen.

**13.** Leitsystem nach einem der Ansprüche 1 bis 12,
**dadurch gekennzeichnet,**
daß die Prozeßmodelle evolutionär mit Optimierungsverfahren, z.B. mit genetischen Algorithmen, dem Verfahren von Hooke-Jeeves, einem Verfahren des Simulated Annealings o.ä. optimiert werden, wobei die jeweils angewandten Optimierungsverfahren situations- und problemabhängig vorgegeben oder ggf. durch Rechentechnik, aus einer Datei ausgewählt werden, z.B. in Abhängigkeit von der Anzahl der zu optimierenden Größen und/oder der Ausbildung der zu erwartenden Minima.

**14.** Leitsystem nach einem der Ansprüche 1 bis 13,
**dadurch gekennzeichnet,**
daß die Startwerte für Optimierungen aus den in einem Prozeßdatenspeicher archivierten, suboptimalen Betriebsdaten ermittelt werden, ggf. durch Fuzzy-Interpolation.

**15.** Leitsystem für technische Einrichtungen, z.B. Produktionsanlagen für Güter oder Energie, Kommunikationseinrichtungen etc., nach einem oder mehreren der vorhergehenden Ansprüche,
**dadurch gekennzeichnet,**
daß es ein Basis-Funktionssystem für die Prozeßkomponenten aufweist, das die Anweisungen aus dem rechentechnisch, z.B. aus einem Prozeßmodell, vorzugsweise einem Prozeßgesamtmodell, gewonnenen Wissen sicher in eine Prozeßführung, etwa in einer Produktionsanlage oder einer Kommunikationseinrichtung etc. umsetzt.

**16.** Leitsystem nach Anspruch 15,
**dadurch gekennzeichnet,**
daß die einstellbaren Prozeßparameter, die vorteilhaft so ermittelt wurden, daß die vom Modell nachgebildeten Kennwerte des erzeugten Produktes möglichst gut mit den vorgegebenen Wunschwerten übereinstimmen, als Vorgabe an das Basis-Funktionssystem des Prozesses gegeben werden und von diesem der Prozeß entsprechend den Vorgabewerten eingestellt wird.

**17.** Leitsystem nach Anspruch 15 oder 16,
**dadurch gekennzeichnet,**
daß das Basisfunktionssystem als ein, die zur Durchführung des Prozesses notwendigen Komponenten je für sich oder zusammengefaßt sicher arbeitsfähig machendes, Basis-Automatisierungssystem ausgebildet ist.

**18.** Leitsystem nach Anspruch 17,
**dadurch gekennzeichnet,**
daß das Basis-Automatisierungssystem als autonomes, einen sicheren Zustand des Prozesses garantierendes Subsystem (Gefahren-Zustands-Rückfallsystem) ausgebildet ist, das anstelle der rechentechnisch erzeugten Anweisungen, insbesondere auf als sicher erkannte, im Datenspeicher abgelegte, Betriebswerte zurückgreifen kann.

**19.** Leitsystem nach Anspruch 15, 16, 17 oder 18,
**dadurch gekennzeichnet,**
daß das Basis-Funktionssystem Start- und Hochlauf-Routinen aufweist, die manuell oder automatisch eingegeben werden können, sowie suboptimale Normalbetriebsroutinen, in denen einzelne, sonst rechentechnisch ermittelte, Anweisungen durch konstante Vorgaben ersetzt werden können.

**20.** Leitsystem nach Anspruch 15, 16, 17, 18 oder 19,
**dadurch gekennzeichnet,**
daß das Basis-Funktionssystem eine Zeitsteuerung o.ä. enthält, mit denen die Übergabe von vorermittelten Einstellwerten (Vorgabewerten) situationsgerecht, z.B. der Mengenflußkonstanz entsprechend, erfolgt.

**21.** Leitsystem nach Anspruch 15, 16, 17, 18, 19 oder 20,
**dadurch gekennzeichnet,**
daß die Vorgabewerte für das Basis-Funktionssystem bei einem Ausbleiben der rechentechnisch gewonnenen Werte direkt aus den Daten der Prozeßdatenbank erzeugt werden können, wobei zur Verbesserung insbesondere zwischen den gespeicherten sicheren Betriebsdaten interpoliert wird, ggf. mit einer Fuzzy-Interpolation.

**22.** Leitsystem nach einem oder mehreren der vorhergehenden Ansprüche, **dadurch gekennzeichnet,**
daß das eingegebene und selbst generierte Wissen auch durch externe Simulationsrechnungen, Modellversuche o.ä. verbessert wird, insbesondere in Anpassung oder Optimierung der verwendeten technischen Mittel.

**Claims**

**1.** Intelligent computer control system for plants having a plurality of plant sections in which technical or biological processes are executed in a target-oriented manner, for example production plants for goods or power, communication facilities, etc, which is constructed so as to build on knowledge which is input and self-generated - in a computing device for the plant - automatically recognising with the aid of the end results of the process the respective status of the processes being executed in the sections of the facility, for example continuous manufacturing processes, working processes, etc, and, in accordance with the situation, in order to achieve the process target for the plant sections, giving instructions in the form of desired values for the control of the plant sections, which instructions are established by calculation in model accuracy and adapted to the actual status of the process, wherein the input knowledge is preferably input in technologically or possibly biologically based algorithms, wherein included in the input and self-generated knowledge is the situation-related behaviour and operation of the components of the facility during the execution of the process, and wherein the status of processes being executed in the plant sections and/or of individual subprocesses is, for adaptation and possibly optimisation, simulated continuously with the aid of process models, also generated automatically in the computing device, which process models are constructed in modular fashion and describe the behaviour between the process input quantities and variable quantities and the process output quantities, for example quality characteristics.

**2.** Control system according to claim 1,
characterised in that the instructions suitable for the situation are obtained by calculation from a process simulation (model) in a computer, which process simulation describes in particular the effect of changes in process variables on the process result.

**3.** Control system according to claim 1 or 2, characterised in that the process input conditions are fed to the process simulation (model) and from this, in accordance with the situation, instructions for achieving the process target are generated.

**4.** Control system according to claim 1, 2 or 3, characterised in that it is constructed so as to generate the instructions suitable for the situation with the aid of an adaptation of the model, thereby preferably working automatically in predetermined routines.

**5.** Control system according to claim 4, characterised in that it continuously carries out an optimisation, in particular a step-by-step optimisation, of the model, preferably an algorithmic process model.

**6.** Control system according to claim 5, characterised in that the optimisation takes place by means of selected trial and error routines on the process model with constant success checking.

**7.** Control system according to claim 1, 2, 3, 4, 5 or 6, characterised in that the input and self-generated knowledge, preferably automatically, is continuously improved by knowledge obtained internally by calculation on the model, for example in the case of different demands on the process, and this self-generated process knowledge is transferred as input and self-generated knowledge into a data memory, in particular a constantly updated data memory.

**8.** Control system according to one of claims 1 to 7, characterised in that at least partially, insofar as they can be modelled on the basis of mathematicalphysical, chemical, metallurgical, biological laws or suchlike, the process models have mathematical forms of description.

**9.** Control system according to one of claims 1 to 8, characterised in that the process models for the plant components for which there is process knowledge which can be expressed linguistically have linguistically formulated model portions which can be realised, for example, by fuzzy systems, neuro-fuzzy systems, expert systems or table works.

**10.** Control system according to one of claims 1 to 9, characterised in that the process models for the plant components for which a model formation on a mathematical-physical, biological or metallurgical basis or on the basis of process knowledge which can be described linguistically is not possible have systems which are self-learning or self-structuring in a self-learning manner, for example neuronal networks.

11. Control system according to one of claims 1 to 10, characterised in that on the basis of compiled process data archived in the process database, the process models are continuously matched or corrected to the process, and in that this takes place by means of adaptive procedures or learning procedures, for example as a result of a back-propagation learning procedure or a selection procedure for various partial models, for instance neuronal networks.

12. Control system according to one of claims 1 to 11, characterised in that the process models, preferably off-line, are adapted by a model adaptation in such a way that the model output quantities, which are in particular quality characteristics of the process result, correspond as closely as possible to predetermined values, for example the values to be aimed at.

13. Control system according to one of claims 1 to 12, characterised in that the process models are optimised in an evolutionary manner with optimisation procedures, for example with genetic algorithms, the Hooke-Jeeves procedure, a simulated-annealing procedure or suchlike, with the optimisation procedures used in each case being predetermined as a function of the situation and problem or selected from a dataset, possibly by calculation, for example as a function of the number of variables to be optimised and/or the formation of the minima to be expected.

14. Control system according to one of claims 1 to 13, characterised in that the start values for optimisations are determined, possibly by fuzzy interpolation, from the suboptimal operating data archived in a process data memory.

15. Control system for technical facilities, for example production plants for goods or power, communication facilities, etc, according to one or more of the preceding claims, characterised in that it has a basic function system for the process components which reliably converts the instructions from the knowledge obtained by calculation, for example from a process model, preferably a total process model, into a process control, for instance in a production plant or a communications facility, etc.

16. Control system according to claim 15, characterised in that the adjustable process parameters, which were advantageously determined in such a way that the model-simulated characteristics of the generated product correspond as closely as possible to the predetermined desired values, are passed as a setpoint input to the basic function system of the process, and the process is adjusted by the latter in accordance with the setpoint values.

17. Control system according to claim 15 or 16, characterised in that the basic function system is constructed as a basic automation system which makes the components needed for carrying out the process able to work reliably either alone or in combination.

18. Control system according to claim 17, characterised in that the basic automation system is constructed as an autonomous subsystem (danger-status release system) which guarantees a safe status of the process and, instead of the instructions generated by calculation, can fall back in particular on operating values which have been recognised as safe and are stored in the data memory.

19. Control system according to claim 15, 16, 17 or 18, characterised in that the basic function system has start routines and runup routines which can be input manually or automatically, as well as suboptimal normal operating routines in which individual instructions which are otherwise determined by calculation can be replaced by constant setpoint inputs.

20. Control system according to claim 15, 16, 17, 18 or 19, characterised in that the basic function system contains a time control device or suchlike with which the transfer of predetermined set values (setpoint values) takes place in accordance with the situation, for example corresponding to the mass flow constancy.

21. Control system according to claim 15, 16, 17, 18, 19 or 20, characterised in that in the case of an absence of the values obtained by calculation, the setpoint values for the basic function system can be generated directly from the data in the process database, in which case, for the improvement, an interpolation takes place in particular between the items of stored reliable operating data, possibly with a fuzzy interpolation.

22. Control system according to one or more of the preceding claims, characterised in that the input and self-generated knowledge is also improved by external simulation calculations, model tests or suchlike, in particular in adaptation or optimisation of the technical means used.

**EP 0 813 700 B1**

**Revendications**

1. Système de commande d'ordinateur intelligent pour des installations à plusieurs parties dans lesquelles se déroulent des opérations techniques ou biologiques visant un objectif, par exemple des installations de production de produits ou d'énergie, des installations de communication etc., qui est réalisé pour, sur la base d'une connaissance rentrée et auto-générée - dans un dispositif de calcul pour l'installation - reconnaître automatiquement l'état des opérations se déroulant dans les parties de l'installation, par exemple d'opérations de fabrication en continu, de modes opératoires, etc. à l'aide des résultats finaux d'opération et à donner, conformément à la situation, en vue d'atteindre l'objectif de l'opération pour les parties de l'installation, des indications déterminées par des techniques de calcul suivant une précision type et adaptées à l'état réel de l'opération, ce qui est entré étant entré de préférence suivant des algorithmes à base technologique ou éventuellement biologique, le comportement et l'effet des composants de l'installation étant intégrés pendant le déroulement opératoire à la connaissance entrée et auto-générée, et l'état des opérations se déroulant dans les parties de l'installation et/ou de sous-opérations individuelles étant simulé en permanence à l'aide de modèles opératoires - aussi générés de manière autonome dans l'installation de calcul- en vue de l'adaptation et le cas échéant de l'optimisation, les modèles opératoires étant constitués de manière modulaire et décrivant le comportement entre des valeurs d'entrée d'opérations ainsi que des valeurs variables et des valeurs de sortie d'opérations, par exemple des valeurs caractéristiques de qualité.

2. Système de commande suivant la revendication 1, caractérisé en ce que les indications conformes à la situation sont obtenues dans un ordinateur par des techniques de calcul à partir d'une simulation d'opérations (modèles), le modèle décrivant notamment l'effet de variation de variables d'opérations sur le résultat de l'opération.

3. Système de commande suivant la revendication 1 ou 2, caractérisé en ce que les conditions d'entrée d'opérations sont remises à la simulation d'opérations (modèles) et en ce que des indications conformes à la situation en sont générées pour atteindre l'objectif de l'opération.

4. Système de commande suivant la revendication 1, 2 ou 3, caractérisé en ce qu'il est constitué de manière à produire des indications conformes à la situation à l'aide d'une adaptation du modèle, mais à travailler tout de même de préférence de manière autonome suivant des routines prescrites.

5. Système de commande suivant la revendication 4, caractérisé en ce qu'il effectue en permanence une optimisation, notamment une optimisation pas-à-pas, du modèle, de préférence d'un modèle opératoire algorithmique.

6. Système de commande suivant la revendication 5, caractérisé en ce que l'optimisation s'effectue par des routines essais-erreurs sélectionnées sur le modèle opératoire sous un contrôle de succès permanent.

7. Système de commande suivant la revendication 1, 2, 3, 4, 5 ou 6, caractérisé en ce que la connaissance rentrée et auto-générée est améliorée de préférence de manière autonome, en permanence par une connaissance obtenue de manière interne par des moyens de calculs sur le modèle, par exemple pour différentes exigences posées à l'opération, et en ce que cette connaissance opératoire auto-générée est prise en charge comme connaissance rentrée et auto-générée dans une mémoire de données, notamment mise à jour en permanence.

8. Système de commande suivant l'une des revendications 1 à 7, caractérisé en ce que les modèles opératoires comportent au moins partiellement des formes de descriptions mathématiques dans la mesure où ils peuvent être modélisés sur la base de lois mathématico-physiques, chimiques, métallurgiques, biologiques ou autres.

9. Système de commande suivant l'une des revendications 1 à 8, caractérisé en ce que les modèles opératoires pour les composantes de l'installation pour lesquelles une connaissance opératoire est présente peuvent être exprimés de manière linguistique, comportent des parties de modèles formulées de manière linguistique qui peuvent être réalisées par exemple par des systèmes à logique floue, par des systèmes neurologiques à logique floue, par des systèmes experts ou par des systèmes de tables.

10. Système de commande suivant l'une des revendications 1 à 9, caractérisé en ce que les modèles opératoires pour les composantes d'installation pour lesquelles une formation de modèles sur la base de fondement mathématico-physique, biologique ou métallurgique ou sur la base d'une connaissance opératoire pouvant être décrite de manière linguistique n'est pas possible comporte des systèmes d'auto-apprentissage ou s'auto-structurant pour l'auto-apprentissage, par exemple des réseaux neuronaux.

**11.** Système de commande suivant l'une des revendications 1 à 10, caractérisé en ce que les modèles opératoires sont adaptés ou asservis en permanence à l'opération sur la base de données opératoires collectées qui sont archivées dans la banque de données opératoires et en ce que l'on obtient cela au moyen de procédés adaptatifs ou de procédés d'apprentissage, par exemple par un procédé d'apprentissage back-propagation ou par un procédé de sélection pour divers sous-modèles, par exemple des réseaux neuronaux.

**12.** Système de commande suivant l'une des revendications 1 à 11, caractérisé en ce que les modèles opératoires sont adaptés de préférence hors ligne, par une adaptation de modèles de telle manière que les grandeurs de sortie de modèles qui sont notamment des valeurs caractéristiques de qualité des résultats opératoires coïncident aussi bien que possible avec des valeurs prescrites, par exemple les valeurs que l'on cherche à atteindre.

**13.** Système de commande suivant l'une des revendications 1 à 12, caractérisé en ce que les modèles opératoires sont optimisés de manière évolutive par des procédés d'optimisation, par exemple par des algorithmes génétiques, le procédé de Hooke-Jeeves, un procédé de Simulated Annealings ou autre, les procédés d'optimisation utilisés étant prescrits en fonction de la situation et en fonction du problème ou étant sélectionnés dans un fichier, le cas échéant par une technique de calcul, par exemple en fonction du nombre des grandeurs à optimiser et/ou de la configuration des minimas à attendre.

**14.** Système de commande suivant l'une des revendications 1 à 13, caractérisé en ce que les valeurs de départ pour des optimisations sont déterminées à partir des données de fonctionnement sub-optimales archivées dans une mémoire de données opératoires, le cas échéant par interpolation à logique floue.

**15.** Système de commande pour des dispositifs techniques, par exemple des installations de production de produits ou d'énergie, des installations de communication etc., suivant l'une ou plusieurs des revendications précédentes, caractérisé en ce qu'il comporte un système fonctionnel de base pour les composantes opératoires qui convertit les indications provenant de la connaissance obtenues par une technique de calcul, par exemple d'un modèle opératoire, de préférence d'un modèle global opératoire, de manière sûre en une gestion d'opérations, par exemple dans une installation de production ou une installation de communication etc.

**16.** Système de commande suivant la revendication 15, caractérisé en ce que les paramètres opératoires réglables qui ont été déterminés avantageusement de telle manière que les valeurs caractéristiques du produit fabriqué simulé par le modèle, coïncide aussi bien que possible avec les valeurs souhaitées prescrites, en ce que ces paramètres sont données comme prescription au système fonctionnel de base de l'opération et en ce que l'opération est réglée par ce système fonctionnel de base en fonction des valeurs prescrites.

**17.** Système de commande suivant la revendication 15 ou 16, caractérisé en ce que le système fonctionnel de base est réalisé en système d'automatisation de base qui rend apte à fonctionner de manière sûre les composantes nécessaires à l'exécution de l'opération, chacune pour soi ou en réunion.

**18.** Système de commande suivant la revendication 17, caractérisé en ce que le système d'automatisation de base est réalisé en sous-systèmes autonomes garantissant un état sûr de l'opération (systèmes à retour danger-état) qui peut accéder notamment à des valeurs de fonctionnement reconnues comme sûres, enregistrées dans la mémoire de données, au lieu des indications produites par une technique de calcul.

**19.** Système de commande suivant la revendication 15, 16, 17 ou 18, caractérisé en le système fonctionnel de base comporte des routines de départ et de haut régime qui peuvent être entrées manuellement ou automatiquement, ainsi que des routines de fonctionnement normal suboptimales dans lesquelles des indications individuelles, déterminées sinon par une technique de calcul, peuvent être remplacées par des prescriptions constantes.

**20.** Système de commande suivant la revendication 15, 16, 17, 18 ou 19, caractérisé en ce que le système fonctionnel de base contient une commande en fonction du temps ou autre par lesquels la transmission de valeurs réglées (valeurs prescrites) prédéterminées s'effectue conformément à la situation, par exemple en fonction de la constance des flux quantitatifs.

**21.** Système de commande suivant la revendication 15, 16, 17, 18, 19 ou 20, caractérisé en ce que les valeurs prescrites pour le système fonctionnel de base peuvent être produites directement à partir des données de la banque de données opératoires en cas de défaillance des données obtenues par une technique de calcul, notamment une interpellation étant effectuée entre les données de fonctionnement sûres mémorisées en vue de l'amélioration, le cas échéant par une interpellation à logique floue.

22. Système de commande suivant l'une ou plusieurs des revendications précédentes, caractérisé en ce que la connaissance rentrée et auto-générée est améliorée aussi par des calculs de simulation externes, des essais de modèle ou autres, notamment en adaptation ou en optimisation des moyens techniques utilisés.

FIG 1

EP 0 813 700 B1

**FIG 2**

**FIG 3**

FIG 4

FIG 6

FIG 5

45

Zeitsteuerung

V

I

Basisregelungen

| 21 | 22 | 23 | 24 | 25 |
| 26 | 27 | 28 | 29 | 30 |
| 31 | 32 | 33 | 34 | 35 |
| 36 | 37 | 38 | 39 | • • • |

Steuerungen, Verriegelungen

40

| 41 | 42 | 43 | 44 | • • • |

VI

**FIG 7**